# EUROPÄISCHE PATENTANMELDUNG

(11) **EP 3 135 929 A1**
(43) Veröffentlichungstag der Anmeldung: **01.03.2017**
(21) Anmeldenummer: 16181138.5
(22) Anmeldetag: 26.07.2016
(51) Int. Cl.: F16C 19/54, F16C 19/52, F16C 35/06, F16C 35/073, F16C 25/08, F16C 27/04, F16C 27/06, F16C 35/04, F16C 35/067, F16C 35/063, F16C 35/07

(54) **WELLENLAGERUNG**

(30) Priorität: 26.08.2015 AT 2572015 U
(71) Anmelder: MSG Mechatronic Systems GmbH, 8551 Wies (AT)
(72) Erfinder: FÜRPASS, Stefan, 8552 Eibiswald (AT); KRAUTBERGER, Franz, 8551 Wies (AT); LAMPL, Ewald, 8551 Wies (AT)
(74) Vertreter: Schwarz & Partner

(57) **Zusammenfassung**

Wellenlagerung (1) mit zwei in einer Lagerhülse (2) aufgenommenen Lagerkörpem (3, 4), die jeweils einen Lager-Innenring (15, 16) und einen Lager-Außenring (5, 9) aufweisen, wobei die Welle (14) mittels Spielpassung durch die Lager-Innenringe (15, 16) der Lagerkörper (3, 4) hindurch geführt ist und die Lager-Außenringe (5, 9) der Lagerkörper (3, 4) in der Lagerhülse (2) fixiert sind. Erfindungsgemäß spannt eine erste Feder (20), die an einem Ende (18, 22) der Welle (14) angebracht ist, den Lager-Innenring (15) des ersten Lagerkörpers (3) gegen den Lager-Innenring (16) des zweiten Lagerkörpers (4) mit einer ersten Federkraft (20) axial vor, wobei eine zweite Feder (21), die zwischen dem ersten Lagerkörper (3) und dem zweiten Lagerkörper (4) angeordnet ist, der ersten Feder (20) entgegen wirkt und gegen die Lager-Innenringe (15, 16) der Lagerkörper (3, 4) vorgespannt ist.

## Beschreibung

Die Erfindung betrifft eine Wellenlagerung.

Es sind allgemein Wellenlagerungen bekannt, bei welchen Lagerkörper, die zur drehbaren Lagerung einer Welle ausgebildet sind, gegeneinander vorgespannt sind, um eine:
▪ Verringerung des Lagerspiels;
▪ Erhöhung der Genauigkeit der Wellenführung;
▪ Verringerung des Laufgeräusches;
▪ Erhöhung der Steifigkeit; und
▪ Erhöhung der Lebensdauer der Wellenlagerung
zu erreichen.

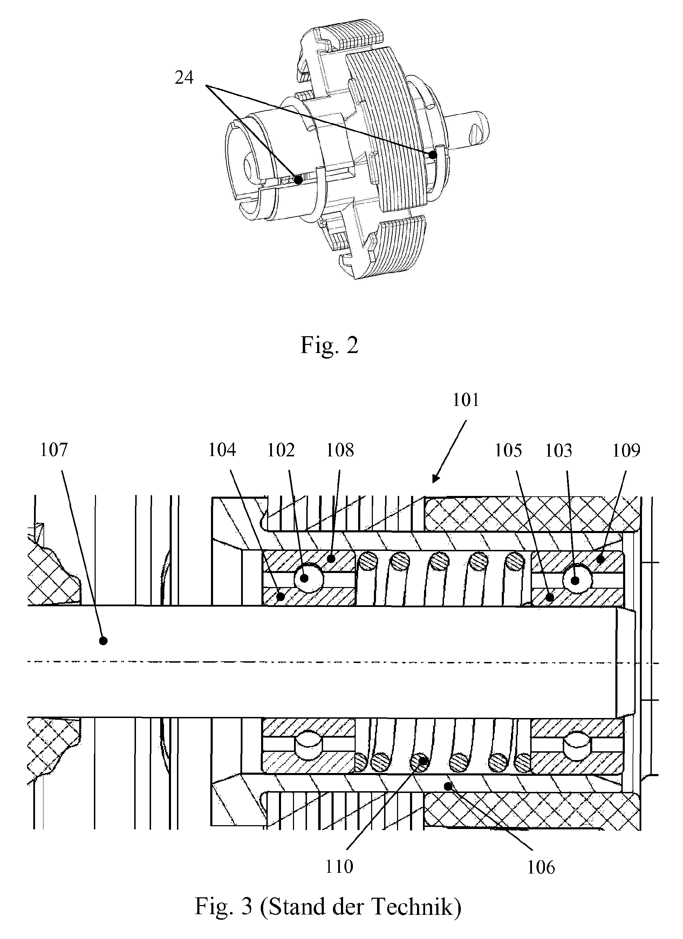

Figur 3 zeigt ein Beispiel einer konventionell vorgespannten Wellenlagerung 101, bei welcher ein Lager-Innenring 104 eines ersten Lagerkörpers 102 und ein Lager-Innenring 105 eines zweiten Lagerkörpers 103 auf einer Welle 107 mittels eines Presssitzes axial, radial und drehfest fixiert sind. Ein Lager-Außenring, entweder der Lager-Außenring 108 des ersten Lagerkörpers 102 oder der Lager-Außenring 109 des zweiten Lagerkörpers 103 ist in einer Lagerhülse 106 axial, radial und drehfest fixiert, wobei der andere Lager- Außenring mittels einer Spielpassung in der Lagerhülse 106 aufgenommen ist. Zur axialen Vorspannung der Wellenlagerung 101 drückt eine Feder 110, die koaxial zur Welle 107 angeordnet ist, von dem Lager- Außenring, der in der Lagerhülse 106 axial, radial und drehfest fixiert ist, abstützend gegen den Lager-Außenring des anderen mittels Spielpassung in der Lagerhülse 106 aufgenommenen Lagerkörpers. Über die Federkonstante der Feder 110 und über die Vorspannung der Feder 110 wird die Vorspannkraft eingestellt, die den ersten Lagerkörper 102 gegen den zweiten Lagerkörper 103 vorspannt. Mittels der Feder 110 werden im Betrieb etwaig auftretende Längenänderungen der Welle 107, zum Beispiel durch Temperaturschwankungen aufgrund von während des Betriebs entstehender Wärme oder aufgrund von äußeren Einflüssen, kompensiert. Dadurch bleibt die auf den ersten Lagerkörper 102 und den zweiten Lagerkörper 103 aufgebrachte Vorspannkraft während des Betriebes annähernd konstant.

Eine solche Lagerung wird vor allem zur Lagerung von Kleinantrieben eingesetzt, bei welchen Vibrationen aufgrund von geringer Belastung und hoher Drehzahl auftreten können. Durch eine Vorspannung wird zusätzlich Last auf die Lagerung aufgebracht, wodurch die Welle ruhiger umläuft und die Dauerhaltbarkeit der Lagerkörper erhöht wird.

Weiters sind mittels zwei Federn vorgespannte Wellenlagerungen für elektrische Maschinen bekannt, bei denen zwei Lagerkörper in einer Lagerhülse, die als Gehäuse ausgebildet ist, beabstandet fixiert und zur drehbaren Lagerung eines Rotors ausgebildet sind. Die Federn stützen sich hierzu jeweils an einer Seite des Rotors ab und drücken gegen jeweils einen an einem jeweiligen Ende mittels Gleitsitz mit der Welle verbundenen Lager-Innenring eines Lagerkörpers. Hierdurch wird eine spielfreie Lagerung des Rotors ermöglicht und es werden Vibrationen in der Lagerung vermieden.

Eine solche Wellenlagerung ist beispielsweise aus WO 2004/057729 A1 bekannt.

Nachteilig an den oben angeführten Wellenlagerungen erweisen sich die notwendigen hohen Fertigungsgenauigkeiten der Lagersitze und der hohe Aufwand bei der Montage der ein- oder aufgepressten Lagerringe. Weiters nachteilig ist, dass bei den mittels Spielpassung mit der Welle oder der Lagerhülse verbundenen Lagerringen die Möglichkeit besteht, dass Schlupf zwischen den Lagerringen und den jeweiligen Lagersitzen oder an den Lagerringen tangential gekoppelten Teilen, die mit der Welle oder mit der Lagerhülse fest verbunden sind, auftritt. Durch Schlupf kommt es zu erhöhtem Abrieb der Bauteile und dadurch zu Verschleiß. Dies ist vor allem bei den Lagersitzen kritisch, da diese bei erhöhtem Schlupf überproportional hoch abgenutzt werden, was bei schnellen Lastwechseln und raschen Drehzahländerungen zum Durchrutschen der Lagerringe führen kann. Durch Erhöhung der Vorspannung der Lagerkörper gegeneinander kann Schlupf entgegengewirkt werden, da dadurch die Reibung zwischen der Welle bzw. der Lagerhülse und den mittels Spielpassung mit der Welle bzw. der Lagerhülse verbundenen Lagerringen sowie zwischen der Feder und den mit der Feder tangential gekoppelten Lagerringen erhöht wird. Dies würde aber gleichzeitig zu einer überproportionalen Belastung der Lagerkörper führen und dadurch die Lebensdauer der Lagerkörper herabsetzen.

Es ist daher die Aufgabe der Erfindung eine Wellenlagerung so auszubilden, dass bei möglichst hohen Fertigungstoleranzen, unabhängig von der Vorspannung der Lagerkörper, Schlupf zwischen den Lagerringen und an den Lagerringen tangential gekoppelten Teilen verhindert wird.

Die vorliegende Erfindung löst diese Aufgabe mittels einer ersten und einer zweiten Feder, wobei die zweite Feder entgegen der ersten Feder wirkt und koaxial zur Welle zwischen dem ersten und dem zweiten Lagerkörper angeordnet und gegen deren Lager-Innenringe mit einer zweiten Federkraft axial vorgespannt ist. Die zweite Feder koppelt somit über Reibung die Lager-Innenringe des ersten und des zweiten Lagerkörpers. Die Federkraft der zweiten Feder wird dabei vorteilhaft gerade so groß gewählt, dass die mittels Reibung übertragenen Kräfte zwischen der zweiten Feder und den Flanken der Lager-Innenringe gerade groß genug sind, um Schlupf zwischen den Lager-Innenringen zu verhindern.

Die erste Feder ist an einem Ende der Welle angeordnet und stützt sich vorteilhaft an einem an der Welle axial und drehfest fixierten ersten Teil ab und drückt entgegen der zweiten Federkraft auf den Lager-Innenring eines der beiden Lagerkörper. Das erste Teil ist bevorzugt möglichst kostengünstig ausgestaltet und ohne großen fertigungstechnischen Aufwand mit der Welle demontierbar form-, reib-, oder kraftschlüssig verbunden. In diesem Zusammenhang erweist es sich als vorteilhaft, den ersten Teil als einen Sicherungsring auszuführen. Zur axialen Fixierung der Welle stützt sich diese mittels einer Wellenschulter oder einem an der Welle axial fixierten zweiten Teil am Lager-Innenring des anderen Lagerkörpers anstehend ab. Letzteres wird aufgrund der einfacheren Montage der Wellenlagerung und aufgrund des geringeren fertigungstechnischen Aufwands bevorzugt, wobei das zweite Teil mittels Form-, Reib-, oder Kraftschluss mit der Welle verbunden ist. Vorteilhaft ist der zweite Teil als ein Antriebsteil ausgeführt, insbesondere als ein Lüfterrad.

Die zur Vorspannung der Lagerkörper gegeneinander nötige Vorspannkraft bildet sich aus der Differenz der Federkraft der ersten Feder und der Federkraft der zweiten Feder. In Bezug auf den konstruktiven Aufbau und aufgrund der leichteren Montage und Demontage ist vorteilhaft die Federkraft der ersten Feder größer als die Federkraft der zweiten Feder. Durch die mittels der ersten Feder schlupffeste Verbindung eines Lager-Innenrings mit dem mit der Welle fix verbundenen ersten Teil sind folglich durch die zweite Feder beide Lager-Innenringe schlupffest mit der Welle verbunden. Durch die erfindungsgemäße Anordnung der Federn ist somit der Vorteil erhalten, dass mittels der Differenz der ersten und der zweiten Federkraft je nach Anforderung an die Wellenlagerung die Vorspannkraft zur Vorspannung der Lagerkörper gegeneinander unabhängig von der Vorspannkraft zur Verhinderung von Schlupf zwischen den Lager-Innenringen und an ihnen tangential gekoppelten Teilen einstellbar ist.

Die Lagerhülse weist vorteilhaft in dem Bereich, in dem der erste Lagerkörper aufgenommen ist, und in dem Bereich, in dem der zweite Lagerkörper aufgenommen ist, in axialer Richtung verlaufende Schlitze auf. Weiters ist der Innendurchmesser der Lagerhülse in den Bereichen, in denen die Lagerkörper aufgenommen sind, geringfügig größer als der Außendurchmesser der Lager-Außenringe. Dies gewährleistet bei der Montage eine einfache und problemlose Ausrichtung der Lagerkörper in der Lagerhülse. Mittels jeweils eines Spannrings, der über ein jeweiliges Ende der Lagerhülse geschoben wird, wird der Innendurchmesser der Lagerhülse reduziert, wodurch die Lagerkörper in der Lagerhülse reibschlüssig fixiert werden. Dies wird durch die axial verlaufenden Schlitze erleichtert, da mittels der Schlitze der Widerstand gegen Formänderung der Lagerhülse herabgesetzt wird. Die Kraft, die mittels jeweils eines Spannrings auf die Hülse aufgebracht wird, muss dabei so groß sein, dass Schlupf zwischen dem jeweiligen Lager-Außenring und der Lagerhülse vermieden wird. Der Spannring ist bevorzugt aus einem Metalldraht gebogen und hat die Form eines nicht durchgängigen Ringes, wodurch eine einfache und kostengünstige Fertigung möglich ist. Zur leichteren Positionierung der Lagerkörper in der Lagerhülse bei der Montage werden diese bevorzugt jeweils an einem Anschlag in der Lagerhülse anstehend fixiert, wobei die Anschläge, an denen die Lager-Außenringe anstehen, gegenüberliegend voneinander abgewandt in der Lagerhülse ausgebildet sind. Dadurch ist auch bei etwaigem Austausch der Lagerkörper, zum Beispiel aufgrund von Verschleiß, die Position des Lagerkörpers in der Lagerhülse wieder klar definiert. Durch die vorteilhafte konstruktive Ausgestaltung der Lagerhülse können die Fertigungstoleranzen der Lagerhülse viel höher gewählt werden, wodurch der fertigungstechnische Aufwand reduziert wird und die Herstellkosten verringert werden. In diesem Zusammenhang erweist sich als sehr vorteilhaft die Lagerhülse als preiswertes Spritzgussteil auszuführen, insbesondere als ein Kunststoffspritzgussteil.

Zur weiteren Reduzierung des fertigungstechnischen Aufwandes ist vorteilhaft die Lagerhülse als Spulenkörper für Statorwicklungen eines Elektromotors ausgeformt. Hierdurch wird auch der Vorteil erhalten, dass die Masse umlaufender Teile reduziert wird.

Die Erfindung wird nun anhand eines Ausführungsbeispiels unter Bezugnahme auf die Zeichnungen näher beschrieben.
Figur 1 zeigt eine Schnittdarstellung einer Ausführungsvariante einer erfindungsgemäßen Wellenlagerung; und
Figur 2 zeigt eine perspektivische Darstellung einer erfindungsgemäßen Wellenlagerung nach Figur 1.
Figur 3 zeigt ein Beispiel des Standes der Technik einer konventionell vorgespannten Wellenlagerung.

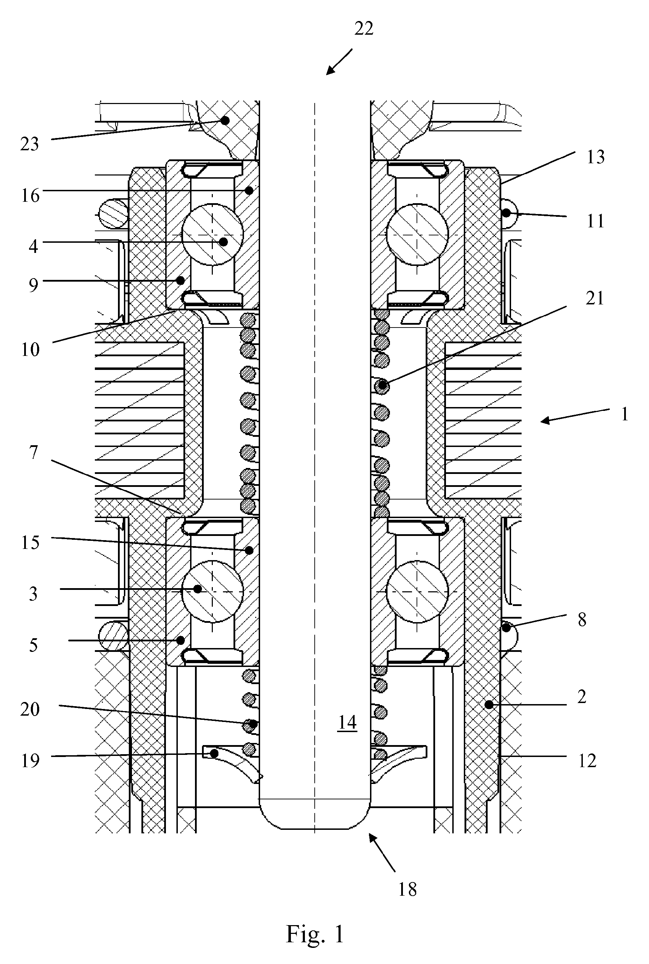

Figur 1 zeigt eine Schnittdarstellung einer Ausführungsvariante einer erfindungsgemäßen Wellenlagerung 1. Die Wellenlagerung 1 umfasst eine Lagerhülse 2, in der der erste Lagerkörper 3 und der zweite Lagerkörper 4 aufgenommen sind. Bevorzugt sind der erste Lagerkörper 3 und der zweite Lagerkörper 4 als Wälzlager ausgeführt, insbesondere als Kugellager. Der Lager-Außenring 5 des ersten Lagerkörpers 3 ist an einem ersten Anschlag 7 anstehend mit Hilfe eines ersten Spannrings 8, der über die äußere Mantelfläche 12 der Lagerhülse 2 geschoben wird, reibschlüssig in der Lagerhülse 2 fixiert. Der Lager-Außenring 9 des zweiten Lagerkörpers 4 ist an einem zweiten Anschlag 10, der dem ersten Anschlag 7 gegenüber und abgewandt in der Lagerhülse 2 ausgebildet ist, anstehend mit Hilfe eines zweiten Spannrings 11, der über die äußere Mantelfläche 13 der Lagerhülse 2 geschoben wird, reibschlüssig in der Lagerhülse 2 fixiert.

Die Welle 14 ist mit einer Spielpassung durch den Lager-Innenring 15 des ersten Lagerkörpers 3 und durch den Lager-Innenring 16 des zweiten Lagerkörpers 4 hindurch geführt. An einem ersten Ende 18 der Welle 14 ist über Reibschluss ein Sicherungsring 19 angebracht, an dem sich die erste Feder 20, die koaxial zur Welle 14 angeordnet ist, abstützt und gegen den Lager-Innenring 15 des ersten Lagerkörpers 3 drückt. Zwischen dem Lager-Innenring 15 des ersten Lagerkörpers 3 und dem Lager-Innenring 16 des zweiten Lagerkörpers 4 ist zur schlupffreien Kopplung dieser eine zweite Feder 21 koaxial zur Welle 14 angebracht, deren Federkraft entgegen der Federkraft der ersten Feder 20 wirkt. Zur axialen Fixierung der Welle 14 stützt sich diese mittels eines an dem zweiten Ende 22 der Welle 14 reib-, und formschlüssig angebrachten Lüfterrads 23 an dem Lager-Innenring 16 des zweiten Lagerkörpers 4 ab. Bevorzugt werden die erste Feder 20 und die zweite Feder 21 als Spiral- oder Scheibenfedern ausgeführt.

Figur 2 zeigt eine perspektivische Darstellung einer erfindungsgemäßen Wellenlagerung 1 nach Figur 1. In der Lagerhülse 2 sind in dem Bereich, in dem der erste Lagerkörper 3 aufgenommen ist, und in dem Bereich, in dem der zweite Lagerkörper 4 aufgenommen ist, in axialer Richtung verlaufende Schlitze 24 vorgesehen. Mittels der Schlitze 24 wird der Widerstand der Lagerhülse 2 gegen Verformung herabgesetzt, wodurch der Vorteil erhalten ist, dass der jeweilige zur Fixierung des ersten Lagerkörpers 3 und des zweiten Lagerkörpers 4 nötige Kraftaufwand herabgesetzt wird und dadurch ein kleinerer erster Spannring 8 und ein kleinerer zweiter Spannring 11 eingesetzt werden können.

## Patentansprüche

1. Wellenlagerung (1) mit einem in einer Lagerhülse (2) aufgenommenen ersten Lagerkörper (3), der einen Lager-Innenring (15) und einen Lager-Außenring (5) aufweist, wobei die Welle (14) mittels Spielpassung durch den Lager-Innenring (15) hindurch geführt ist und der Lager-Außenring (5) an der Lagerhülse (2) drehfest fixiert ist, und einem in der Lagerhülse (2) aufgenommenen zweiten Lagerkörper (4), der einen Lager-Innenring (16) und einen Lager-Außenring (9) aufweist, wobei die Welle (14) mittels Spielpassung durch den Lager-Innenring (16) hindurch geführt ist und der Lager-Außenring (9) an der Lagerhülse (2) drehfest fixiert ist, und mit einer ersten Feder (20), die an einem Ende (18, 22) der Welle (14) angebracht ist und mit einer ersten Federkraft den Lager-Innenring (15) des ersten Lagerkörpers (3) gegen den Lager-Innenring (16) des zweiten Lagerkörpers (4) vorspannt, wobei sich die erste Feder (20) an der Welle (14) oder an einem an ihr axial und drehfest fixiertem ersten Teil axial abstützt und gegen den Lager-Innenring (15, 16) eines der beiden Lagerkörper (3,4) drückt, und sich die Welle (14) oder ein an ihr axial fixierter zweiter Teil axial am Lager-Innenring (15, 16) des anderen der beiden Lagerkörper (3, 4) abstützt, **dadurch gekennzeichnet, dass** eine zweite Feder (21) zwischen dem ersten Lagerkörper (3) und dem zweiten Lagerkörper (4) angeordnet und gegen deren Lager-Innenringe (15, 16) mit einer zweiten Federkraft axial vorgespannt ist, wobei die zweite Federkraft der ersten Federkraft entgegen wirkt.

2. Wellenlagerung (1) nach Anspruch 1, **dadurch gekennzeichnet, dass** die Lagerhülse (2) in dem Bereich, in dem der erste Lagerkörper (3) aufgenommen ist, und in dem Bereich, in dem der zweite Lagerkörper (4) aufgenommen ist, in axialer Richtung verlaufende Schlitze (24) aufweist.

3. Wellenlagerung (1) nach Anspruch 1 oder 2, **dadurch gekennzeichnet, dass** der erste Lagerkörper (3) und der zweite Lagerkörper (4) jeweils mit einem Spannring (8, 11) in der Lagerhülse (2) fixiert sind.

4. Wellenlagerung (1) nach einem der vorherigen Ansprüche, **dadurch gekennzeichnet, dass** der erste Lagerkörper (3) und der zweite Lagerkörper (4) in der Lagerhülse (2) an einem Anschlag (7, 10) anstehend fixiert sind.

5. Wellenlagerung (1) nach einem der vorherigen Ansprüche, **dadurch gekennzeichnet, dass** die zweite Federkraft geringer ist als die erste Federkraft.

6. Wellenlagerung (1) nach einem der vorherigen Ansprüche, **dadurch gekennzeichnet, dass** der erste Teil ein Sicherungsring (19) ist.

7. Wellenlagerung (1) nach einem der vorherigen Ansprüche, **dadurch gekennzeichnet, dass** der zweite Teil ein Antriebsteil, insbesondere ein Lüfterrad (23) ist.

8. Wellenlagerung (1) noch einem der vorherigen Ansprüche, **dadurch gekennzeichnet, dass** die Lagerhülse (2) als Spulenkörper ausgeführt ist.
